# FASCICULE DE BREVET EUROPEEN

(11) **EP 3 406 993 B1**
(45) Date de publication et mention de la délivrance du brevet: **02.08.2023**
(21) Numéro de dépôt: 18163215.9
(22) Date de dépôt: 22.03.2018
(51) Int. Cl.: F25J 3/02

(54) **DISPOSITIF ET PROCÉDÉ D'ÉPURATION D'UN MÉLANGE DE GAZ**
VORRICHTUNG UND VERFAHREN ZUR REINIGUNG EINES GASGEMISCHS
DEVICE AND METHOD FOR PURIFYING A GAS MIXTURE

(30) Priorité: 22.05.2017 FR 1754497
(43) Date de publication de la demande: 28.11.2018
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: BARJHOUX, Pierre, 38700 LA TRONCHE (FR); BOUVIER, Camille, 38000 GRENOBLE (FR); DURAND, Fabien, 38340 VOREPPES (FR); STAEMPFLIN, Martin, 38950 QUAIX EN CHARTREUSE (FR); ZICK, Golo, 38600 FONTAINE (FR)
(74) Mandataire: Air Liquide

(56) Documents cités:
- DE-A1- 2 207 509
- DE-A1-102010 042 247
- FR-A- 1 578 463
- FR-A1- 3 000 541
- US-A- 3 854 914
- BONDARENKO V ET AL: "WAVE CRYOGENERATORS APPLIED IN TECHNOLOGIES OF RARE GAS SEPARATION", INTERNATIONAL CONGRESS OF REFRIGERATION. PROCEEDINGS - CONGRESINTERNATIONAL DU FROID. COMPTES RENDUS, XX, XX, 21 août 2007 (2007-08-21), pages 1-8, XP001543123,
- GÃ 1/4 NTER PH PEER: "Gewinnung von reinstem Neon", LINDE BERICHTE AUS TECHNIK UND WISSENSCHAFT,, no. 26, 1 juillet 1969 (1969-07-01), pages 32-36, XP001253985,

## Description

L'invention concerne un procédé et un dispositif d'épuration d'un mélange de gaz.

L'invention concerne en particulier l'épuration d'un mélange de gaz pour obtenir un gaz pur ou quasi pur, par exemple du néon.

L'invention concerne plus particulièrement un dispositif d'épuration d'un mélange de gaz selon la revendication 1.

Le néon est un gaz rare très utilisé dans le domaine de l'électronique.

Pour ces applications en particulier, ce gaz doit être purifié à des taux de pureté assez élevés (impuretés présentes en fin de traitement de l'ordre de quelques ppm).

Pour obtenir un tel gaz concentré, il existe plusieurs concepts de purification.

Les procédés connus permettent cependant difficilement de concilier les exigences de pureté, la capacité à purifier des gaz impurs (pour une grande amplitude de compositions à l'entrée du procédé) et les performances énergétiques.

Les procédés de purification de néon connus utilisent généralement une purification cryogénique couplée à une distillation cryogénique.

Le document DE102010042247 décrit l'utilisation d'une boucle fermée hélium (cycle de type Brayton inversé : compression à membranes et deux turbines en série) pour refroidir le mélange à une température de 26K et pour condenser le néon en vue de sa séparation gravitaire de l'hélium. En aval, la purification est complétée par une distillation cryogénique. Le document FR1578463A décrit un dispositif d'épuration d'un mélange de gaz pour produire un gaz concentré, notamment du néon, à partir d'un mélange comprenant du néon selon le préambule de la revendication 1.

Selon d'autres solutions connues, la purification est obtenue par opérations successives de compression et de détente. Ce type de procédé ne permet pas d'atteindre des puretés de l'ordre du ppm, mais plutôt de l'ordre du pourcent. En effet, l'impureté hélium reste dissoute dans le néon liquide si une colonne de distillation finale (efficace) n'est pas utilisée.

Un but de la présente invention est de pallier tout ou partie des inconvénients de l'art antérieur relevés ci-dessus.

A cette fin, le procédé selon l'invention, défini par la revendication 9.

L'utilisation d'une source froide de type refroidisseur cryogénique dénommé « cryocooler », avant la distillation cryogénique permet de parfaire la purification du gaz avec une grande efficacité.

En effet, cette source froide est locale. Par "source froide locale", on désigne un système de production de froid non étagé. Une puissance froide est générée à une température donnée et à une extrémité de ce système, par opposition à un cycle de production de froid qui produit une puissance froide au niveau de différents étages distincts (différentes extrémités) à des températures respectives distinctes.

La température peut être finement contrôlée. Cela permet d'approcher au mieux le point triple, si nécessaire, du gaz à condenser et ainsi appauvrir la phase liquide en impureté.

Par ailleurs, des modes de réalisation de l'invention peuvent comporter les caractéristiques des revendications dépendantes.

Selon d'autres particularités :
- le mélange de gaz à purifier comprend du néon dans une proportion volumique comprise entre 15 et 65%, de l'hélium dans une proportion volumique comprise entre 3 et 20%, de l'hydrogène dans une proportion volumique comprise entre 0,2 et 4%, de l'azote dans une proportion volumique comprise entre 20 et 60% et en ce que ledit gaz concentré produit contient du néon dans une proportion volumique comprise entre 85 et 100%,
- le rapport (ou rendement) entre le débit volumique de néon à l'entrée du dispositif et le débit volumique de néon à la sortie du dispositif supérieur à 85% et de préférence compris entre 85 et 98 %.

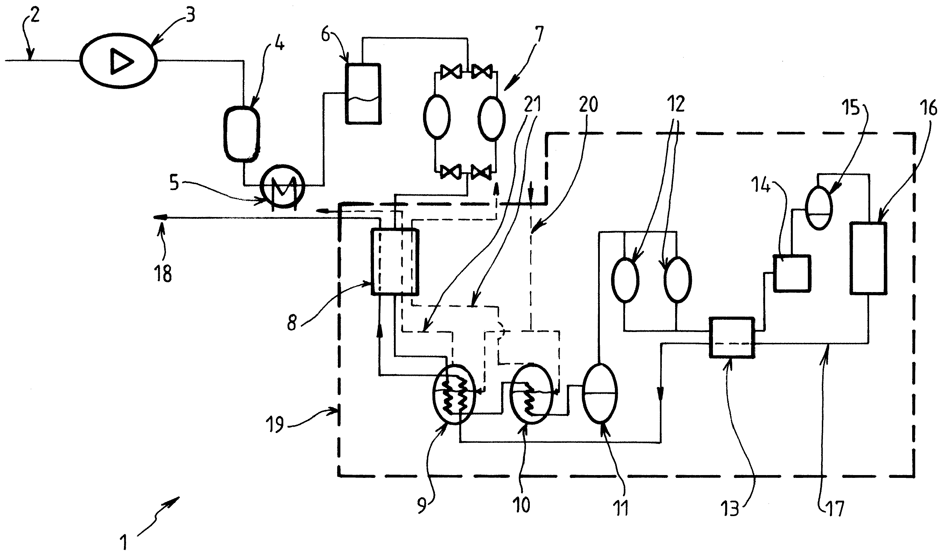

D'autres particularités et avantages apparaîtront à la lecture de la description ci-après, faite en référence à la figure unique qui représente une vue schématique et partielle illustrant un exemple de structure et de fonctionnement d'un exemple possible de dispositif selon l'invention.

Le dispositif 1 d'épuration d'un mélange de gaz représenté à la figure comprend un circuit de purification dont l'entrée 2 est alimentée en gaz à purifier contenant du néon, de l'hélium et des impuretés type gaz présents dans l'air.

Par exemple le mélange de gaz ou gaz brut est composé d'azote, de néon, d'hélium, d'hydrogène, de monoxyde de carbone et de traces d'autres gaz éventuels (argon, oxygène, dioxyde de carbone,...).

Par exemple, le mélange de gaz à purifier comprend du néon dans une proportion volumique comprise entre 15 et 65%, de l'hélium dans une proportion volumique comprise entre 3 et 20%, de l'hydrogène dans une proportion volumique comprise entre 0,2 et 4%, de l'azote dans une proportion volumique comprise entre 20 et 60%.

La pression du mélange peut être de l'ordre de 1,5 bar et la température de l'ordre de 5 à 35°C à l'entrée de l'installation par exemple.

De préférence le dispositif est prévu pour produire du néon concentré dans une proportion volumique comprise entre 85 et 100% et notamment plus de 99%, par exemple au moins 99,999%.

En aval de l'entrée, le dispositif 1 peut comprendre un compresseur 3 avec éventuellement un système de refroidissement (non représenté par soucis de simplification) du gaz compressé à la température ambiante.

En aval du compresseur 3, le dispositif comporte de préférence un organe 4 de retrait d'au moins une partie de l'hydrogène contenu dans le mélange.

Par exemple cet organe 4 réalise une épuration « chaude » du gaz brut comprimé pour retirer les impuretés H2 + CO via une injection contrôlée d'O₂ dans ou en amont d'un lit catalytique (par exemple de l'alumine + enrobage type oxyde de palladium). La réaction chimique, exothermique, conduit à la formation d'eau et de CO2. Ces composés peuvent être retirés du mélange brut par liquéfaction (cf. le pot 6 séparateur d'eau pour le composé H₂O) et adsorption dans un tamis moléculaire (par exemple de type 13X, alumine ou gel de silice).

A cet effet, en aval de cet organe 4 et en amont du pot 6 séparateur d'eau, le gaz peut être refroidi dans un échangeur 5.

En aval du pot 6 séparateur d'eau le dispositif comprend de préférence un dessiccateur 7 pour retirer au moins une partie de la vapeur d'eau et/ou du CO2 contenus dans le mélange. Par exemple, l'eau et le CO2 peuvent être retirés dans des colonnes de tamis moléculaires qui fonctionnent en alternance (une est en phase d'adsorption tandis que l'autre et en phase de régénération, par exemple avec un flux d'azote chaud ou un autre gaz inerte).

En aval du dessiccateur 7, le mélange entre dans une boîte froide 19 (par exemple isolée sous vide) dans lequel le mélange est refroidi dans un premier échangeur 8 cryogénique de refroidissement. Ce premier échangeur 8 cryogénique de refroidissement est par exemple un échangeur contre-courant à plaques et configuré pour refroidir le mélange à une température comprise entre 65K et 110K, par exemple 80K.

En aval, le mélange est refroidi dans un ou deux bains 9, 10 d'azote liquide (par exemple par échange thermique avec un échangeur de chaleur, notamment tubulaire, qui véhicule le mélange). Le premier bain 9 d'azote liquide est par exemple maintenu à pression atmosphérique et à saturation, tandis que le second bain 10 d'azote liquide est par exemple maintenu à une pression inférieure à la pression atmosphérique (par exemple 0.18 bar abs) et à une température de 65K.

En aval, un pot séparateur 11 récupère la phase liquide composée essentiellement d'azote. Ce liquide peut être ensuite recyclé dans l'un au moins des deux bains d'azote 9, 10 afin de valoriser ce fluide cryogénique en l'intégrant dans le bilan thermique de l'unité.

La phase gazeuse est ensuite purifiée dans un organe 12 de purification par adsorption cryogénique. Cet organe 12 comprend par exemple deux tamis moléculaires fonctionnant de façon alternée (adsorption/régénération) pour piéger l'azote, l'oxygène et l'argon.

En aval de cet organe 12, le mélange est composé essentiellement d'hélium et de néon.

Ce mélange peut être refroidi dans un échangeur 13 à une température de l'ordre de 35K par exemple. Cet échangeur 13 est par exemple de type tubulaire et à contre-courant qui échange avec le néon purifié (comme décrit plus en détail ci-après). Cet échangeur de chaleur peut par exemple compter plusieurs tubes internes, véhiculant par exemple le néon purifié à réchauffer, au sein d'une calandre.

En aval, le mélange est refroidi, par exemple autour de 25K, au moyen d'un organe 14 de refroidissement comprenant au moins un refroidisseur cryogénique muni d'une tête froide par exemple qui extrait la chaleur au mélange via un échangeur de chaleur.

Par « refroidisseur cryogénique » on désigne une machine de production de froid non étagé, à température constante, tel qu'un refroidisseur cryogénique (« cryocooler » en anglais) par exemple du type Gifford Mc Mahon, tube à gaz pulsé, refroidisseur cryogénique du type Stirling ou refroidisseur cryogénique du type Joule-Thomson.

Cette machine « refroidisseur cryogénique » n'est ainsi pas une boucle de refroidissement (par exemple à hélium) tel que décrit dans le document cité ci-dessus.

Par exemple, l'organe 14 de refroidissement comprend un ou plusieurs refroidisseurs cryogéniques en série et un ou des échangeurs de chaleur (par exemple en cuivre ou en aluminium) accueillant le mélange de fluide et en échange thermique avec les têtes froides desdits refroidisseurs cryogéniques en série.

Le mélange refroidi passe dans un pot séparateur de phase 15. Le néon liquide est récupéré pour alimenter au moins une colonne 16 de distillation cryogénique.

Le mélange gazeux récupéré peut être utilisé pour refroidir l'écran thermique de la colonne 16 de distillation par exemple. Une vanne de détente (non représentée) peut être prévue entre le pot séparateur de phase 15 et la colonne 16 de distillation pour abaisser la pression, par exemple à 1,5bar et faciliter la séparation hélium - néon.

La colonne 16 de distillation peut être dépourvue de condenseur. Le gaz au sommet de la colonne (moitié néon, moitié hélium par exemple) peut être éventuellement recyclé vers le compresseur 3 en entrée 2 du dispositif 1.

Par exemple la séparation du mélange néon/hélium (environ 1% volumique d'Hélium en sortie du séparateur de phase 15) peut être réalisée dans une colonne 16 de distillation remplie de garnissage (structuré ou en vrac). Un bouilleur avec réchauffeur peut permettre d'avoir moins de 3ppm volumique d'hélium à l'extraction liquide de la colonne 16 de distillation cryogénique.

Le néon purifié peut ainsi être récupéré en phase liquide. Ce néon liquide froid peut être mis en échange thermique avec l'échangeur 13 de refroidissement situé entre l'organe 12 de purification par adsorption cryogénique et l'organe 14 de refroidissement cryogénique.

Ce néon liquide froid peut être mis en échange thermique également ensuite avec l'un au moins des bains d'azote (par exemple le bain d'azote 9) puis avec le premier échangeur 8 cryogénique de refroidissement.

En sortie 18 de la boîte froide ce gaz néon concentré peut être réchauffé à la température ambiante puis par exemple comprimé dans des bouteilles haute pression.

Ainsi, le dispositif réalise une épuration cryogénique du gaz brut dans le but de séparer le néon et l'hélium des autres composants restants (N2, traces de gaz de l'air). L'azote est séparé du mélange de brut par condensation liquide par exemple (à 77K puis à 65K) puis par adsorption cryogénique (par exemple à 65K). Les sources froides pour réaliser ces séparations et pour refroidir le mélange de brut peuvent être de l'azote liquide à saturation à pression atmosphérique ou supérieur et/ou de l'azote liquide à saturation à une pression sub-atmosphérique. L'hélium et le néon restant suite à la phase d'adsorption sont refroidis à une température proche de 25 K (température proche du point triple du corps pur Ne) à l'aide d'un ou plusieurs cryo-réfrigérateurs (pouvant être du type Gifford MacMahon, Pulse-tube, ...). A cette température, une grande proportion du néon sera liquéfiée et pourra être séparée de la phase gazeuse plus riche en Hélium. La phase liquide, riche en néon, devra cependant être distillée afin de séparer ce dernier d'un résidu d'hélium dissout dans le néon (environ 1% volumique).

Le dispositif permet d'atteindre une pureté Néon très élevée (< 10ppm volumique d'impuretés).

Comme illustré via des lignes pointillées à la figure, le ou les bains 9, 10 d'azote peuvent être alimenté en fluide de refroidissement (source d'azote liquide par exemple extérieure à la boîte froide) via au moins une ligne 20 d'amenée. De même, des lignes 21 de récupération de gaz vaporisé dans le ou le bains 9, 10 peuvent être prévues. Ces lignes 21 de récupération peuvent être mises en échange thermique avec le premier échangeur 8 cryogénique de refroidissement. Ce fluide s'écoulant au sein des lignes de récupération 21 peut ensuite être collecté vers une sortie de la boîte froide.

Selon une variante possible l'organe 14 de refroidissement pourrait comprendre ou être constitué d'un dispositif de production de froid fonctionnant selon un cycle de Claude (cycle fermé à base de néon et/ou d'hydrogène dont la partie la plus froide est imposée par la température de liquéfaction du fluide à une pression donnée). Classiquement un cycle de Claude comprend un fluide qui effectue un ou plusieurs cycles de Brayton inverse associé à un système de détente (vanne à effet Joule Thomson notamment) qui détend le fluide pour atteindre une température froide cible. L'extrémité froide obtenue par cette détente constituant la source froide locale.

Selon une autre variante possible (en combinaison ou en alternative), l'organe 4 de retrait d'hydrogène pourrait être supprimé et l'installation peut être utilisée pour purifier de l'hydrogène c'est-à-dire produire de l'hydrogène exempt d'impuretés type hélium, azote, argon par exemple.

## Revendications

1. Dispositif d'épuration d'un mélange de gaz pour produire un gaz concentré, notamment du néon, à partir d'un mélange comprenant du néon, en passant par un gaz concentré liquéfié, le dispositif comprenant une boîte froide (19) abritant un circuit de purification cryogénique comprenant en série, au moins un organe (12) de purification par adsorption cryogénique du mélange à une température comprise entre 65K et 100K et notamment 65K, puis un organe (14) de refroidissement du mélange à une température comprise entre 25 et 65 K comprenant un échangeur de chaleur, puis un organe (16) de distillation cryogénique du mélange pour produire en sortie de l'organe (16) de distillation cryogénique ledit gaz concentré liquéfié (17), l'organe (14) de refroidissement du mélange à une température comprise entre 25 et 65 K étant un système de production de froid non étagé et comprenant l' au moins un refroidisseur cryogénique qui extrait une puissance thermique au mélange via l' échangeur de chaleur, le dispositif comportant une conduite (17) de récupération du gaz concentré liquéfié en sortie de l'organe (16) de distillation cryogénique, au moins un autre organe (8, 9, 13) de refroidissement du mélange situé dans la boîte froide (19) et comprenant un autre échangeur (13) de refroidissement, et la conduite (17) de récupération étant mise en échange thermique avec l'au moins un autre organe (8, 9, 13) de refroidissement du mélange situé dans la boîte froide (19), ladite conduite (17) de récupération du gaz concentré liquéfié étant en échange thermique avec l'autre échangeur (13) de refroidissement du mélange situé en amont du refroidisseur (14) cryogénique, **caractérisé en ce que** l'au moins un refroidisseur cryogénique comprend au moins un refroidisseur cryogénique du type Gifford Mc Mahon ou un tube à gaz pulsé, et **en ce que** l'au moins un autre organe de refroidissement comprend un bain (9) d'azote liquide, le bain (9) d'azote liquide étant en échange thermique avec une tuyauterie qui véhicule le mélange en amont de l'organe (12) de purification par adsorption cryogénique .

2. Dispositif selon la revendication 1, **caractérisé en ce que** l'organe (14) de refroidissement comprend plusieurs refroidisseurs cryogéniques en série et l'échangeur de chaleur accueillant le mélange de gaz est en échange thermique avec les surfaces froides desdits refroidisseurs cryogéniques en série.

3. Dispositif selon l'une quelconque des revendications 1 à 2, **caractérisé en ce que** l'au moins un autre organe de refroidissement comprend, dans la boîte (19) froide, en amont de l'organe (12) de purification par adsorption cryogénique:
un premier échangeur (8) cryogénique de refroidissement du mélange configuré pour refroidir le mélange à une température comprise entre 65K et 110K et de préférence égale à 80K.

4. Dispositif selon l'une quelconque des revendications 1 à 3, **caractérisé en ce que** l'organe (12) de purification par adsorption cryogénique comprend au moins deux adsorbeurs disposés en parallèle immergés dans des bains d'azote liquide à 65K et fonctionnant en alternance (phase d'adsorption / phase de régénération).

5. Dispositif selon l'une quelconque des revendications 1 à 4, **caractérisé en ce que** l'organe (16) de distillation cryogénique est une colonne de séparation du néon et de l'hélium.

6. Dispositif selon l'une quelconque des revendications 1 à 5, **caractérisé en ce qu'**il comprend, en amont de la boîte froide (19), au moins l'un parmi : un organe (4) de retrait d'au moins une partie de l'hydrogène contenu dans le mélange, un dessiccateur (7) de retrait d'au moins une partie de l'eau et/ou du CO2 contenus dans le mélange.

7. Dispositif selon la revendication 6, **caractérisé en ce que** l'organe (4) de retrait d'au moins une partie de l'hydrogène contenu dans le mélange comprend un réacteur catalytique configuré pour transformer l'hydrogène du mélange en eau par réaction avec de l'oxygène.

8. Dispositif selon la revendication 6 ou 7, **caractérisé en ce que** le dessiccateur (7) comprend au moins un et de préférence deux adsorbants pour arrêter l'eau et du dioxyde de carbone fonctionnant en alternance.

9. Procédé de purification d'un mélange de gaz comprenant du néon , de l'azote, de l'oxygène, du monoxyde de carbone et de l'argon, en vue de produire un gaz concentré
en néon, en passant par un gaz concentré liquéfié, le procédé utilisant un dispositif d'épuration selon l'une quelconque des revendications 1 à 8, le procédé comprenant une étape de purification par adsorption cryogénique du mélange via l'organe (12) de purification par adsorption cryogénique à une température comprise entre 63,5K et 80K pour retirer au moins une partie de l'azote, de l'oxygène, du monoxyde de carbone et de l'argon du mélange, puis une étape de refroidissement (14) du mélange à une température comprise entre 25 et 65 K via le refroidisseur cryogénique et proche du point triple du néon en vue de condenser le néon, puis une étape de distillation cryogénique du mélange dans l'organe (16) de distillation cryogénique pour produire, en sortie de l'organe (16) de distillation cryogénique, ledit gaz concentré liquéfié, puis une étape de réchauffage via la conduite (17) de récupération pour produire, en sortie de la conduite (17) de récupération, ledit gaz concentré en néon.

10. Procédé selon la revendication 9, **caractérisé en ce que** le mélange de gaz à purifier comprend du néon dans une proportion volumique comprise entre 15 et 65%, de l'hélium dans une proportion volumique comprise entre 3 et 20%, de l'hydrogène dans une proportion volumique comprise entre 0,2 et 4%, de l'azote dans une proportion volumique comprise entre 20 et 60% et **en ce que** ledit gaz concentré produit contient du néon dans une proportion volumique comprise entre 85 et 100%.

11. Procédé selon la revendication 9 ou 10, **caractérisé en ce que** le rapport entre le débit volumique de néon à l'entrée du dispositif et le débit volumique de néon à la sortie du dispositif est supérieur à 85% et de préférence compris entre 85 et 98 %.

## Patentansprüche

1. Vorrichtung zur Reinigung eines Gasgemischs zur Herstellung eines konzentrierten Gases, insbesondere Neon, aus einem Neon enthaltenden Gemisch, über die Zwischenstufe eines verflüssigten konzentrierten Gases, wobei die Vorrichtung eine Kältekammer (19) umfasst, in der ein kryogener Reinigungskreislauf untergebracht ist, der nacheinander mindestens eine Einheit (12) zum Reinigen mittels kryogener Adsorption des Gemischs bei einer Temperatur zwischen 65 K und 100 K und insbesondere 65 K, dann eine Einheit (14) zum Abkühlen des Gemischs auf eine Temperatur zwischen 25 und 65 K, die einen Wärmetauscher umfasst,
dann eine Einheit (16) für die kryogene Destillation des Gemischs zur Herstellung des verflüssigten konzentrierten Gases (17) am Auslass der Einheit (16) für die kryogene Destillation umfasst, wobei es sich bei der Einheit (14) zum Abkühlen des Gemischs auf eine Temperatur zwischen 25 und 65 K um ein System zur Kälteerzeugung ohne Stufen handelt und sie mindestens einen Kryokühler umfasst, der aus dem Gemisch über den Wärmetauscher eine Wärmeleistung abführt, wobei die Vorrichtung eine Leitung (17) zur Rückgewinnung des verflüssigten konzentrierten Gases am Auslass der Einheit (16) für die kryogene Destillation aufweist, wobei sich mindestens eine weitere Einheit (8, 9, 13) zum Abkühlen des Gemischs in der Kühlkammer (19) befindet und einen weiteren Kältetauscher (13) umfasst, und wobei die Rückgewinnungsleitung (17) mit der mindestens einen weiteren Einheit (8, 9, 13) zum Abkühlen des Gemischs, die sich in der Kältekammer (19) befindet, in eine Wärmeaustauschverbindung gebracht ist, wobei die Leitung (17) zur Rückgewinnung des verflüssigten konzentrierten Gases in einer Wärmeaustauschverbindung mit dem weiteren Kältetauscher (13) für das Gemisch steht, der sich in Strömungsrichtung vor dem Kryokühler (14) befindet, **dadurch gekennzeichnet, dass** mindestens ein Kryokühler mindestens einen Gifford-McMahon-Kryokühler oder eine Pulsröhre umfasst, und dadurch, dass die mindestens eine weitere Kühleinheit ein Flüssigstickstoffbad (9) umfasst, wobei das Flüssigstickstoffbad (9) in einer Wärmeaustauschverbindung mit einer Rohrleitung steht, in der das Gemisch vor der Einheit (12) zum Reinigen mittels kryogener Adsorption befördert wird.

2. Vorrichtung nach Anspruch 1, **dadurch gekennzeichnet, dass** die Kühleinheit (14) mehrere in Reihe geschaltete Kryokühler umfasst und der Wärmetauscher, der das Gasgemisch aufnimmt, in einer Wärmeaustauschverbindung mit den kalten Flächen der in Reihe geschalteten Kryokühler steht.

3. Vorrichtung nach einem der Ansprüche 1 bis 2, **dadurch gekennzeichnet, dass** die mindestens eine weitere Kühleinheit in der Kältekammer (19) in Strömungsrichtung vor der Einheit (12) zum Reinigen mittels kryogener Adsorption einen ersten kryogenen Kältetauscher (8) für das Gemisch umfasst, der so eingerichtet ist, dass er das Gemisch auf eine Temperatur zwischen 65 K und 110 K und vorzugsweise gleich 80 K abkühlt.

4. Vorrichtung nach einem der Ansprüche 1 bis 3, **dadurch gekennzeichnet, dass** die Einheit (12) zum Reinigen mittels kryogener Adsorption mindestens zwei parallel angeordnete Adsorber umfasst, die jeweils in ein Flüssigstickstoffbad bei 65 K getaucht sind und abwechselnd arbeiten (Adsorptionsphase/Regenerationsphase).

5. Vorrichtung nach einem der Ansprüche 1 bis 4, **dadurch gekennzeichnet, dass** die Einheit (16) für die kryogene Destillation eine Trennkolonne für Neon und Helium ist.

6. Vorrichtung nach einem der Ansprüche 1 bis 5, **dadurch gekennzeichnet, dass** sie in Strömungsrichtung vor der Kältekammer (19) Folgendes umfasst: eine Einheit (4) zum Entziehen von mindestens einem Teil des in dem Gemisch enthaltenen Wasserstoffs und/oder einen Exsikkator (7) zum Entziehen von mindestens einem Teil von dem in dem Gemisch enthaltenen Wasser und/oder CO2.

7. Vorrichtung nach Anspruch 6, **dadurch gekennzeichnet, dass** die Einheit (4) zum Entziehen von mindestens einem Teil des in dem Gemisch enthaltenen Wasserstoffs einen katalytischen Reaktor umfasst, der so ausgelegt ist, dass er Wasserstoff aus dem Gemisch über eine Reaktion mit Sauerstoff zu Wasser umsetzt.

8. Vorrichtung nach Anspruch 6 oder 7, **dadurch gekennzeichnet, dass** der Exsikkator (7) mindestens eine und vorzugsweise zwei Adsorptionsmittel umfasst, die abwechselnd arbeiten und so Wasser und Kohlendioxid zurückhalten.

9. Verfahren zur Reinigung eines Gasgemischs, das Neon, Stickstoff, Sauerstoff, Kohlenmonoxid und Argon enthält, zur Herstellung von konzentriertem Neongas, über die Zwischenstufe eines verflüssigten konzentrierten Gases, wobei in dem Verfahren eine Reinigungsvorrichtung nach einem der Ansprüche 1 bis 8 verwendet wird, wobei das Verfahren einen Schritt zum Reinigen des Gemischs mittels kryogener Adsorption über die Einheit (12) zum Reinigen mittels kryogener Adsorption bei einer Temperatur zwischen 63,5 K und 80 K zum Entziehen von mindestens einem Teil des Stickstoffs, Sauerstoffs, Kohlenmonoxids und Argons aus der Mischung, dann einen Schritt zum Abkühlen (14) des Gemischs auf eine Temperatur zwischen 25 und 65 K mit dem Kryokühler und nahe dem Tripelpunkt von Neon zum Kondensieren von Neon, dann einen Schritt zur kryogenen Destillation des Gemischs in der Einheit (16) für die kryogene Destillation zur Herstellung des verflüssigten konzentrierten Gases am Auslass der Einheit (16) für die kryogene Destillation, dann einen Schritt zum Erwärmen über die Rückgewinnungsleitung (17) umfasst, damit am Auslass der Rückgewinnungsleitung (17) das konzentrierte Neongas erhalten wird.

10. Verfahren nach Anspruch 9, **dadurch gekennzeichnet, dass** das zu reinigende Gasgemisch Neon in einem Volumenanteil zwischen 15 und 65%, Helium in einem Volumenanteil zwischen 3 und 20%, Wasserstoff in einem Volumenanteil zwischen 0,2 und 4%, Stickstoff in einem Volumenanteil zwischen 20 und 60% enthält, und dadurch, dass das hergestellte konzentrierte Gas Neon in einem Volumenanteil zwischen 85 und 100% enthält.

11. Verfahren nach Anspruch 9 oder 10, **dadurch gekennzeichnet, dass** das Verhältnis zwischen dem Volumenstrom von Neon am Einlass der Vorrichtung und dem Volumenstrom von Neon am Auslass der Vorrichtung über 85% und vorzugsweise zwischen 85 und 98 % liegt.

## Claims

1. Device for the purification of a gas mixture to produce a concentrated gas, in particular neon, starting from a mixture comprising neon, passing through a liquefied concentrated gas, the device comprising a cold box (19) housing a cryogenic purification circuit comprising, in series, at least one unit (12) for purification by cryogenic adsorption of the mixture at a temperature of between 65K and 100K and in particular 65K, then a unit (14) for cooling the mixture to a temperature of between 25 and 65K comprising a heat exchanger, then a unit (16) for cryogenic distillation of the mixture to produce said liquefied concentrated gas (17) at the outlet of the cryogenic distillation unit (16), the unit (14) for cooling the mixture to a temperature of between 25 and 65K being a system for cold production, not in stages, and comprising the at least one cryocooler which extracts thermal power from the mixture via the heat exchanger, the device comprising a pipe (17) for recovery of the liquefied concentrated gas at the outlet of the cryogenic distillation unit (16), at least one other unit (8, 9, 13) for cooling the mixture being located in the cold box (19) and comprising another cooling exchanger (13), and the recovery pipe (17) being put in heat exchange with the at least one other unit (8, 9, 13) for cooling the mixture located in the cold box (19), said pipe (17) for recovery of the liquefied concentrated gas being in heat exchange with the other exchanger (13) for cooling the mixture located upstream of the cryocooler (14), **characterized in that** the at least one cryocooler comprises at least cryocooler of the Gifford McMahon type or a pulsed gas tube, and **in that** the at least one other cooling unit comprises a bath (9) of liquid nitrogen, the bath (9) of liquid nitrogen being in heat exchange with a pipeline which conveys the mixture upstream of the unit (12) for purification by cryogenic adsorption.

2. Device according to Claim 1, **characterized in that** the cooling unit (14) comprises several cryocoolers in series and the heat exchanger receiving the gas mixture is in heat exchange with the cold services of said cryocoolers in series.

3. Device according to either one of Claims 1 and 2, **characterized in that** the at least one other cooling unit comprises, in the cold box (19), upstream of the unit (12) for purification by cryogenic adsorption: a first cryogenic exchanger (8) for cooling the mixture configured to cool the mixture to a temperature of between 65K and 110K and preferably equal to 80K.

4. Device according to any one of Claims 1 to 3, **characterized in that** unit (12) for purification by cryogenic adsorption comprises at least two adsorbers arranged in parallel immersed in baths of liquid nitrogen at 65K and operating alternately (adsorption phase/regeneration phase).

5. Device according to any one of Claims 1 to 4, **characterized in that** the cryogenic distillation unit (16) is a column for separation of neon and helium.

6. Device according to any one of Claims 1 to 5, **characterized in that** it comprises, upstream of the cold box (19), at least one from: a unit (4) for withdrawal of at least a part of the hydrogen contained in the mixture, a desiccator (7) for withdrawal of at least a part of the water and/or CO₂ which are contained in the mixture.

7. Device according to Claim 6, **characterized in that** the unit (4) for withdrawal of at least a part of the hydrogen contained in the mixture comprises a catalytic reactor configured to convert the hydrogen from the mixture into water by reaction with oxygen.

8. Device according to Claim 6 or 7, **characterized in that** the desiccator (7) comprises at least one and preferably two adsorbents for catching water and carbon dioxide operating alternately.

9. Process for the purification of a gas mixture comprising neon, nitrogen, oxygen, carbon monoxide and argon, with a view to producing a gas concentrated in neon, passing through a liquefied concentrated gas, the process using a purification device according to any one of Claims 1 to 8, the process comprising a stage of purification by cryogenic adsorption of the mixture via the unit (12) for purification by cryogenic adsorption at a temperature of between 63.5K and 80K, to remove at least a part of the nitrogen, oxygen, carbon monoxide and argon from the mixture, then a stage of cooling (14) the mixture to a temperature of between 25 and 65K through the cryocooler and close to the triple point of neon, for the purpose of condensing the neon, then a stage of cryogenic distillation of the mixture in the cryogenic distillation unit (16) to produce, at the outlet of the cryogenic distillation unit (16), said liquefied concentrated gas and then a stage of reheating via the recovery pipe (17), to produce, at the outlet of the recovery pipe (17), said neon-concentrated gas.

10. Process according to Claim 9, **characterized in that** the gas mixture to be purified comprises neon in a proportion by volume of between 15% and 65%, helium in a proportion by volume of between 3% and 20%, hydrogen in a proportion by volume of between 0.2% and 4%, nitrogen in a proportion by volume of between 20% and 60% and **in that** said concentrated gas produced contains neon in a proportion by volume of between 85% and 100%.

11. Process according to Claim 9 or 10, **characterized in that** the ratio of the flow rate by volume of neon at the inlet of the device to the flow rate by volume of neon at the outlet of the device is greater than 85% and preferably between 85% and 98%.
